# FASCICULE DE BREVET EUROPEEN

(11) **EP 3 201 933 B1**
(45) Date de publication et mention de la délivrance du brevet: **22.07.2020**
(21) Numéro de dépôt: 15770905.6
(22) Date de dépôt: 29.09.2015
(51) Int. Cl.: H01H 3/00, G06F 3/01, F16F 9/53, H01H 19/00

(54) **DISPOSITIF POUR INTERFACE HAPTIQUE À COUPLE À VIDE RÉDUIT**
VORRICHTUNG FÜR HAPTISCHE SCHNITTSTELLE MIT REDUZIERTEM NULLLASTDREHMOMENT
DEVICE FOR HAPTIC INTERFACE WITH REDUCED NO-LOAD TORQUE

(30) Priorité: 29.09.2014 FR 1459183
(43) Date de publication de la demande: 09.08.2017
(73) Titulaire: Commissariat à l'Énergie Atomique et aux Énergies Alternatives, 75015 Paris (FR)
(72) Inventeur: HAFEZ, Moustapha, F-91120 Palaiseau (FR); CHANGEON, Gwenael, F-91120 Palaiseau (FR); LOZADA, José, F-91120 Palaiseau (FR); ECK, Laurent, F-91120 Palaiseau (FR)
(74) Mandataire: Brevalex
(86) Numéro de dépôt international: PCT/EP2015/072318
(87) Numéro de publication internationale: WO 2016/050719

(56) Documents cités:
- FR-A1- 2 930 655
- US-A1- 2002 057 152
- US-A1- 2005 126 871
- US-A1- 2006 280 575

## Description

### DOMAINE TECHNIQUE ET ÉTAT DE LA TECHNIQUE ANTÉRIEURE

La présente invention se rapporte à un dispositif pour interface haptique présentant un couple à vide réduit et à une interface haptique comportant un tel dispositif.

Une interface haptique peut prendre la forme d'un bouton rotatif manipulé par un utilisateur, dans ce cas l'interface oppose un couple résistant à l'utilisateur en fonction de la position angulaire du bouton d'actionnement et du déplacement appliqué par l'utilisateur, permettant ainsi de définir des motifs haptiques qui seront ressentis par l'utilisateur lorsqu'il tourne le bouton.

Le couple résistant peut être transmis au bouton par l'intermédiaire d'un fluide magnéto-rhéologique dont la viscosité apparente est modifiée par l'application d'un champ magnétique afin de définir les motifs haptiques prédéfinis.

Afin de rendre le ressenti haptique le plus précis possible on cherche à réaliser des interfaces haptiques présentant un couple à vide réduit.

Une interface haptique rotative à fluide magnéto-rhéologique de l'état de la technique comporte un bouton solidaire d'un élément plongé dans un fluide magnéto-rhéologique, un champ magnétique est appliqué au fluide dont la viscosité apparente varie. Le fluide est stocké dans une chambre, l'arbre est guidé en rotation autour de son axe au moyen de paliers situés de part et d'autre de l'élément d'interaction avec le fluide. Afin d'assurer l'étanchéité entre l'arbre et la chambre et isoler les paliers du fluide magnéto-rhéologique, deux étanchéités sont à réaliser entre l'arbre et les parois de la chambre. Ces étanchéités sont obtenues par des joints montés serrés. L'interface haptique présente alors un couple à vide important.

Le document FR 2 930 655 A1 décrit un dispositif pour interface haptique selon le préambule de la revendication 1, cette interface haptique à fluide magnéto-rhéologique mettant en œuvre un élément d'interaction avec le fluide magnéto-rhéologique en forme de jupe et des moyens de génération d'un champ magnétique variable comportant une bobine.

### EXPOSÉ DE L'INVENTION

L'invention a pour objet un dispositif pour interface haptique rotative selon la revendication 1.

Le dispositif pour interface haptique comporte un organe d'interaction avec l'utilisateur et un organe d'interaction avec un fluide dont la viscosité apparente varie en fonction d'un stimulus de contrôle, l'organe d'interaction avec l'utilisateur et l'organe d'interaction avec le fluide étant solidaires en rotation d'un arbre mobile autour de son axe longitudinal, ledit élément d'interaction avec le fluide étant disposé dans une chambre contenant ledit fluide, le dispositif comportant également des moyens pour générer un stimulus variable par exemple un champ magnétique variable dans le cas d'un fluide magnéto-rhéologique. L'élément d'interaction avec le fluide présente au moins une jupe d'interaction solidarisée à une extrémité longitudinale de l'arbre opposée à celle fixée à l'organe d'interaction avec l'utilisateur et la jupe s'étend autour de l'arbre en direction de l'organe d'interaction avec l'utilisateur. L'arbre traverse une seule paroi de la chambre, ladite traversée étant étanche et mettant en oeuvre un moyen d'étanchéité. L'interface comporte également des moyens de guidage en rotation de l'arbre disposés entre le moyen d'étanchéité et l'organe d'interaction avec l'utilisateur

La mise en oeuvre d'un seul moyen d'étanchéité permet de réduire le couple à vide.

En d'autre termes, l'orientation de l'élément d'interaction avec le fluide et la disposition relative de cet élément et des moyens de guidage en rotation permettent de n'utiliser qu'un seul joint pour assurer l'étanchéité de la chambre et protéger les moyens de guidage du fluide.

Cette disposition relative permet de préserver les marges de positionnement des éléments du dispositif d'interaction avec le fluide.

Cette disposition relative présente l'avantage d'être compacte.

De manière particulièrement avantageuse, les moyens de guidage sont situés de sorte à être sensiblement alignés avec l'élément d'interaction avec le fluide dans un plan orthogonal à l'arbre. On obtient un très bon guidage en rotation et un encombrement réduit en utilisant le volume à l'intérieur de l'élément d'interaction avec le fluide. L'interface présente alors en outre une grande dynamique de couple, le rapport entre le couple nominal de freinage disponible et le couple à vide étant maximisé sans impacter l'encombrement global de l'interface.

On obtient alors une interface haptique présentant un couple à vide réduit, tout en maintenant les performances de freinage du dispositif et le maintien de l'encombrement général.

Dans un exemple avantageux, les moyens de guidage présentent un angle de rotulage faible, par exemple ils sont formés par une cage à aiguilles.

De préférence, les moyens générant le stimulus variable sont disposés à l'intérieur de l'élément d'interaction avec le fluide, ce qui permet d'obtenir un couple de freinage maximal augmenté en préservant la compacité de la chambre.

Dans un exemple préféré, dans le cas d'un fluide magnéto-rhéologique la chambre est formée en partie dans deux noyaux magnétiques assurant le guidage du champ magnétique.

### BRÈVE DESCRIPTION DES DESSINS

La présente invention sera mieux comprise sur la base de la description qui va suivre et des dessins en annexe sur lesquels:
- la figure 1 est vue de côté d'un exemple de réalisation d'une interface haptique,
- la figure 2 est une vue en coupe selon le plan A-A de l'interface de la figure 1,
- la figure 3 est une vue identique à celle de la figure 2 sur laquelle sont représentées les lignes de champ magnétique généré par les moyens de génération de champ magnétique.

### EXPOSÉ DÉTAILLÉ DE MODES DE RÉALISATION PARTICULIERS

Dans la description qui va suivre, l'exemple d'une interface haptique mettant en oeuvre un fluide magnéto-rhéologique, i.e. dont la viscosité apparente varie en fonction du champ magnétique appliqué, va être décrite mais la mise en oeuvre d'un fluide électro-rhéologique, i.e. un fluide dont la viscosité apparente dépend du champ électrique appliqué, ne sort pas du cadre de la présente invention.

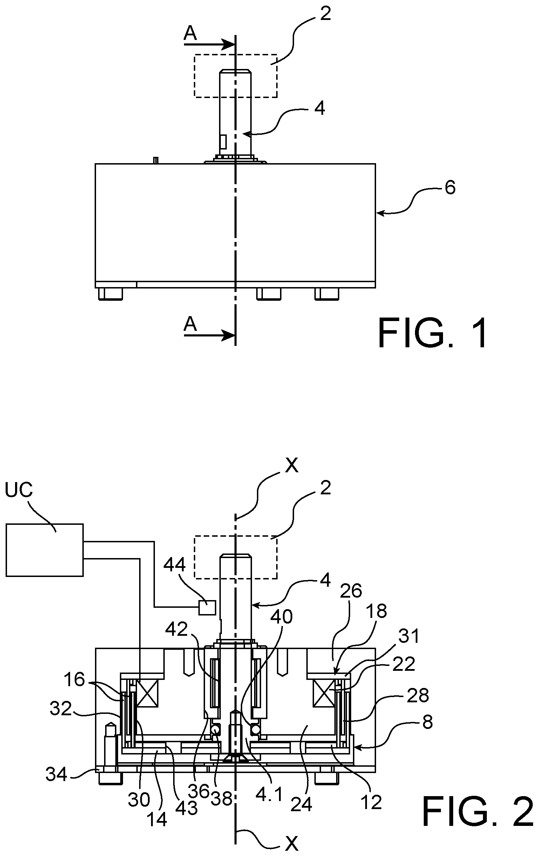

Sur les figures 1 et 2, on peut voir un exemple de réalisation d'une interface haptique à bouton rotatif. L'interface comporte un bouton 2 (représenté en pointillés) destiné à être manipulé par un opérateur, un arbre 4 duquel est solidaire en rotation le bouton 2 et un carter ou boîtier 6 dans lequel est monté mobile en rotation l'arbre 4. L'arbre 4 présente un axe longitudinal X autour duquel il est apte à tourner.

Sur la figure 2, on peut voir l'intérieur du boîtier 6.

L'interface comporte également un élément d'interaction 8 avec un fluide magnéto-rhéologique, le fluide et l'élément d'interaction sont contenus dans une chambre étanche 12 dans le boîtier 6. Cet élément 8 est également solidaire en rotation de l'arbre 4 et donc du bouton rotatif 2.

L'élément d'interaction 8 comporte un fond 14 en forme de disque et une ou plusieurs parois périphériques 16 ou jupe de section transversale circulaire s'étendant le long de l'axe X. Les parois périphériques ou jupes sont destinées à interagir avec le fluide, elles pourront être désignées par la suite "paroi d'interaction". De préférence le fond est en matériau amagnétique. Dans l'exemple représenté, l'élément d'interaction comporte deux parois d'interaction concentriques et un élément tubulaire 28 solidaire du boîtier est interposé entre les deux parois d'interaction 16, celui-ci contribue à l'effet de cisaillement du fluide magnéto-rhéologique lorsque les parois d'interaction 16 sont en rotation. Ce sont les parois d'interaction qui interagissent avec le fluide et qui sont plus ou moins freinées par les forces de cisaillement apparaissant entre les parois périphériques et le fluide. Le fond forme un support pour les jupes.

La mise en oeuvre de plusieurs parois d'interaction permet d'augmenter le couple de freinage tout en limitant l'encombrement.

Un dispositif dans lequel l'élément d'interaction avec le fluide ne comporterait qu'une paroi d'interaction et pas d'élément tubulaire ne sort pas du cadre de la présente invention.

Le fond 14 est fixé à une extrémité longitudinale 4.1 de l'arbre 4 située dans la chambre 4. Le fond 14 s'étend sensiblement perpendiculairement à l'axe longitudinal X. Dans l'exemple représenté et de manière avantageuse le fond 14 est maintenu par vissage sur l'axe 4, par exemple par l'intermédiaire d'un carré d'entraînement permettant la transmission du couple de freinage.

Les parois d'interaction 16 s'étendent à partir du fond en direction du bouton rotatif 2. L'élément d'interaction avec le fluide a alors sensiblement la forme d'une cloche retournée, le fond 14 formant la partie inférieure dans la représentation de la figure 2. Il sera compris que l'orientation de l'interface n'intervient pas dans son fonctionnement.

En variante, l'élément 8 peut ne comporter qu'une paroi d'interaction ou plus de deux parois d'interaction concentriques. Par ailleurs, la ou les parois d'interaction pourraient comporter des lumières et/ou des portions en saillie ou en creux afin d'augmenter la résistance au déplacement. Les parois d'interaction 16 de l'élément 8 peuvent être en matériau magnétique ou amagnétique.

L'interface haptique comporte des moyens pour générer un champ magnétique variable 18. Dans l'exemple représenté, ils comportent un électroaimant comprenant une bobine 22 et des noyaux magnétiques 24, 26. La bobine22 présente un axe aligné avec l'axe X.

L'ensemble comprenant le boîtier, le fluide et les moyens de génération d'un champ magnétique forme un frein magnéto-rhéologique pour l'ensemble comprenant le bouton rotatif, l'arbre et l'élément d'interaction avec le fluide.

De manière avantageuse, la bobine est disposée à l'intérieur de l'élément d'interaction avec le fluide, et à l'opposé du fond 14 , ce qui permet d'avoir une paroi d'interaction de grand diamètre ainsi qu'un flux magnétique généré par la bobine qui traverse sur une grande surface la zone de cisaillement des parois d'interaction, ce qui augmente le couple de freinage s'exerçant sur l'arbre et sur le bouton rotatif et donc augmente le ressenti par l'utilisateur.

De manière préférée, les parois latérales intérieure et extérieure de la chambre étanche sont formées directement par les noyaux magnétiques assurant un guidage du champ magnétique.

La bobine est reliée à une alimentation en courant commandée par une unité de commande UC en fonction de la manipulation du bouton et de motifs préenregistrés. Les fils de connexion traversent par exemple le noyau magnétique externe 26.

Le noyau magnétique 24 est disposé dans la bobine 22 et forme une paroi latérale intérieure 30 de la chambre, il sera désigné "noyau magnétique interne". L'autre noyau magnétique 26 est disposé à l'extérieur de la bobine et forme une paroi latérale extérieure 32 de la chambre, il sera désigné "noyau magnétique externe". Dans l'exemple représenté, les deux parois latérales 30, 32 sont tubulaire et concentriques. Les jupes 16 sont disposées dans l'espace entre les parois tubulaires interne 30 et externe 32.

La bobine 22 est logée entre un épaulement du noyau interne 24 et une portée annulaire du noyau externe 26 de sorte à être en regard d'une partie des jupes 16. La bobine 22 est disposée de sorte que le flux magnétique généré traverse la zone de la chambre où se situent les jupes 16.

Le noyau interne 24 présente une forme annulaire et comporte un passage central traversant 36, l'arbre 4 étant monté de manière étanche et apte à pivoter dans le passage central 36 du noyau interne 24. Grâce à l'invention, l'arbre 4 ne traverse qu'une paroi de la chambre et le montage étanche de l'arbre dans la chambre peut être réalisé au moyen d'un seul joint 38, par exemple un joint torique. Le joint 38 est monté serré sur son diamètre extérieur, en contact avec le noyau interne, et glissant sur son diamètre intérieur, en contact avec l'arbre. La mise en oeuvre d'un seul joint permet de réduire le couple de frottement à vide s'exerçant sur l'arbre 4. En outre, de manière encore plus avantageuse, le joint 38 est monté dans une gorge 40 réalisée dans l'arbre. Le joint 38 est alors en contact sur un diamètre réduit de l'arbre 4, ce qui permet de réduire encore davantage le couple à vide sur l'arbre.

La chambre est fermée au niveau de son fond inférieur opposé à celui traversé par l'arbre 4 par une plaque de fermeture 34 fixée au noyau externe 26, par exemple par vissage. La plaque de fermeture 34 est de préférence en matériau amagnétique.

Dans l'exemple représenté, le noyau externe 26 forme la paroi extérieure du boîtier mais d'autres réalisations sont envisageables.

La bobine 22 est avantageusement disposée de sorte qu'une grande surface des parois d'interaction soit traversée par le champ magnétique. De préférence, la bobine 22 est située dans une zone supérieure ou une zone inférieure par rapport à l'espace entre les parois tubulaires interne 30 et externe 32.

Les noyaux magnétiques sont tels qu'ils assurent un guidage du champ magnétique à travers les parois d'interaction 16.

De manière avantageuse, l'élément tubulaire 28 est fixé à une plaquette annulaire 31 qui est, dans l'exemple représenté, pincée entre la portée annulaire du noyau magnétique externe 26 et l'épaulement du noyau magnétique interne 24. De préférence, la plaquette annulaire 31 est en matériau amagnétique.

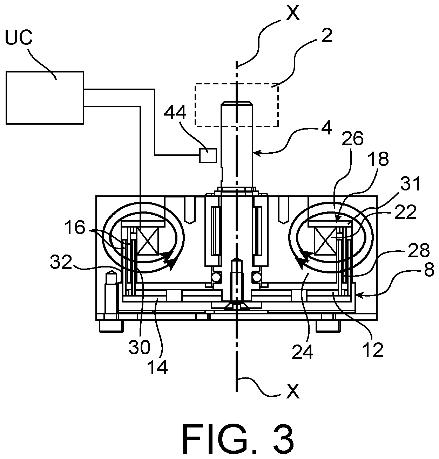

En réalisant le fond 14 de l'élément d'interaction avec le fluide et la plaquette annulaire 31 en matériau amagnétique, les fuites magnétiques vers le haut et vers le bas dans la représentation de la figure 3 sont limitées et le champ magnétique est forcé de traverser les parois périphériques 16 comme cela est schématisé sur la figure 3.

En variante l'élément tubulaire 28 pourrait être encastré directement dans le noyau magnétique externe 26 dans le cas préférentiel d'utilisation d'un matériau amagnétique associé à la présence de lumières pour l'élément tubulaire 28. La chambre étanche a, vue en coupe longitudinale, sensiblement de la forme d'un U correspondant à la forme en coupe longitudinale de l'élément d'interaction avec le fluide, ce qui réduit le volume de fluide requis et réduit l'espace dans lequel un champ magnétique doit être généré.

L'interface comporte également des moyens de guidage 42 en rotation de l'arbre autour de son axe X. les moyens de guidage sont disposés entre le joint 38 et le bouton à l'extérieur de la chambre afin de l'isoler du fluide magnéto-rhéologique, au moins en partie dans l'espace intérieur délimité par la paroi tubulaire interne de la chambre.

Dans l'exemple représenté, les moyens de guidage en rotation 42 sont montés dans le passage central traversant 36 du noyau magnétique interne 24.

Les moyens de guidage en rotation peuvent être formés par un palier, par un ou des roulements à billes et de manière préférée par une cage à aiguilles qui offre un couple à vide réduit. En outre, puisqu'elle présente un angle de rotulage faible, elle permet un bon contrôle de la coaxialité des parois d'interaction et ceci dans un encombrement réduit.

Par ailleurs, la disposition des moyens de guidage 42 au plus près de l'élément d'interaction avec le fluide permet de réduire la distance entre les jupes 16 et les moyens de guidage en rotation, réduisant l'effet de rotulage et donc les risques de contact entre les jupes 16 et les éléments du boîtier, par exemple les parois tubulaires interne 30 et externe 32 et l'élément tubulaire 28.

En outre, sa disposition à "l'intérieur de l'élément d'interaction avec le fluide" permet un gain de place en occupant l'espace situé à l'intérieur de l'élément d'interaction avec le fluide et ainsi d'offrir une interface compacte.

La chambre comporte des zones qui ne participent pas au freinage de l'élément d'interaction avec le fluide, par exemple la zone située entre une extrémité libre des jupes et la plaquette annulaire 31 et la zone située entre le fond et le noyau magnétique interne 24. Ces zones peuvent servir de réserve de fluide et/ou de zone de compensation de volume lors de la dilatation du fluide magnéto-rhéologique.

Avantageusement, le fond comporte des orifices traversants 43 permettant d'évacuer le trop plein et/ou de permette un remplissage complémentaire de la chambre après mise en place de l'élément d'interaction dans la chambre.

L'interface haptique comporte également au moins un capteur 44 permettant de mesurer une caractéristique du déplacement du bouton rotatif, par exemple un capteur de position angulaire. Celui-ci est par exemple fixé en partie sur l'arbre 4 et peut être formé par une roue optique. Le ou les capteurs sont reliés à une unité de commande UC comportant une base de données de motifs haptiques, l'unité de commande UC est elle-même reliée aux moyens de génération d'un champ magnétique.

Le fonctionnement de l'interface haptique va maintenant être décrit.

L'utilisateur manipule le bouton rotatif 2 en le faisant pivoter autour de l'axe X, l'élément d'interaction avec le fluide 8 est également entraîné en rotation. En l'absence de champ magnétique, l'utilisateur ne ressent que le couple à vide qui est, grâce à l'invention, très faible, uniquement dû à un joint.

Le déplacement du bouton rotatif 2 est détecté par le capteur 44, par exemple un capteur de position, qui envoie des informations sur le déplacement du bouton à une unité de commande UC. L'unité de commande à partir de ces signaux détermine le motif haptique à appliquer et génère un ordre qui est envoyé aux moyens de génération d'un champ magnétique. Celui-ci génère un champ magnétique qui est guidé par les noyaux interne 24 et externe 26 et traverse l'espace entre les parois tubulaires interne 30 et externe 32 augmentant la viscosité apparente du fluide magnéto-rhéologique, les forces de cisaillement qui sont liées au fluide, entre les jupes 16 et les parois fixes 30, 32 de la chambre, et entre les jupes 16 et l'élément tubulaire 28, augmentent et s'opposent de manière sensible au déplacement de l'élément d'interaction avec le fluide qui est transmise au bouton rotatif via l'arbre, ce qui génère une sensation de frein ressentie par l'utilisateur.

Le motif haptique peut être une sensation de frein de plus ou moins grande intensité ou alors reproduit une butée.

La valeur du champ magnétique est adaptée en permanence en fonction des signaux envoyés par les capteurs.

Grâce à l'invention, le couple à vide est réduit ce qui améliore la reproduction d'un motif haptique type roue libre.

En outre, la reproduction de butée peut avantageusement être améliorée car le ressenti haptique peut ainsi bénéficier d'une plus grande dynamique d'effort. De manière générale, la sensation haptique de manoeuvre à vide du bouton est perçue de manière favorable par l'utilisateur lorsque le couple à vide est réduit.

En outre sa fabrication est simplifiée.

En outre, dans un mode de réalisation dans lequel l'électroaimant est disposé à l'intérieur de l'élément d'interaction avec le fluide, il offre une couple de freinage maximal augmenté tout en présentant un encombrement réduit.

Grâce à l'orientation de la ou des jupes par rapport au fond et à l'arbre, il est possible de disposer les moyens de guidage en rotation à l'intérieur de la ou des jupes tout en l'isolant du fluide, ce qui améliore le guidage en réduisant les risques de contact entre la ou les jupes et les éléments fixes du frein. En outre, le frein présente une plus grande compacité.

L'interface haptique selon l'invention est particulièrement adaptée à une application dans des véhicules automobiles, par exemple pour former une interface haptique embarquée assistant le conducteur automobile. Elle peut permettre à l'utilisateur d'interagir avec différents équipements ou accessoires du véhicule comme le GPS (Global Positioning System en terminologie anglaise ou Système de positionnement mondial), la radio, la climatisation...

## Revendications

1. Dispositif pour interface haptique rotative comportant :
- un organe d'interaction avec l'utilisateur (2),
- un organe d'interaction (8) avec un fluide dont la viscosité apparente varie en fonction d'un stimulus de contrôle,
- un arbre (4) mobile en rotation autour de son axe, l'organe d'interaction avec l'utilisateur (2) et l'organe d'interaction avec le fluide (8) étant solidaires en rotation dudit arbre (4),
- un fluide magnétorhéologique dont la viscosité apparente varie en fonction d'un stimulus de contrôle,
- une chambre délimitée par des parois et contenant ledit fluide, ledit élément d'interaction (8) avec le fluide étant disposé dans ladite chambre en contact avec le fluide,
- des moyens de génération d'un champ magnétique (18) dans le fluide,
- l'élément d'interaction avec le fluide (8) comportant au moins une paroi d'interaction (16) mobile entourant l'arbre (4), ladite paroi d'interaction (16) étant solidarisée à une première extrémité longitudinale de l'arbre (4) opposée à une deuxième extrémité longitudinale de l'arbre sur laquelle est fixé l'élément d'interaction avec l'utilisateur (2),
- l'arbre (4) traversant une seule paroi de la chambre,
- un moyen d'étanchéité (38) étant disposé entre l'arbre et ladite paroi de la chambre de sorte à réaliser une traversée étanche,
- des moyens de guidage en rotation de l'arbre disposés autour de l'arbre entre le moyen d'étanchéité (38) et l'élément d'interaction avec l'utilisateur,
- les moyens de génération d'un champ magnétique variable comportant une bobine (22) disposée dans l'espace délimité à l'intérieur de la paroi d'interaction (16) de l'élément d'interaction (8) avec le fluide, un noyau magnétique interne (24) disposé dans la bobine (22) et un noyau magnétique externe (26) disposé à l'extérieur de la bobine (22), lesdits noyaux magnétiques interne (24) et externe (26) délimitant au moins en partie la chambre, la bobine (22) étant disposée de sorte à être en regard d'une partie de la paroi d'interaction (16), le noyau magnétique externe comportant une portion axiale formant une paroi périphérique extérieure de la chambre,
**caractérisé en ce que** :
- ladite paroi d'interaction (16) s'étend de ladite première extrémité longitudinale de l'arbre (4) en direction de l'élément d'interaction avec l'utilisateur, et **en ce que**
- le noyau magnétique externe comporte une portion radiale formant une paroi transversale de la chambre.

2. Dispositif selon la revendication 1, dans lequel la bobine (22) est disposée de sorte à être en regard d'une extrémité libre de la paroi d'interaction (16) opposée à celle solidarisée à la première extrémité longitudinale de l'arbre (4).

3. Dispositif selon la revendication 1 ou 2, dans lequel les moyens de guidage en rotation sont positionnés à l'intérieur de l'élément d'interaction avec le fluide au droit de la paroi d'interaction.

4. Dispositif selon la revendication 1, 2 ou 3, dans lequel les moyens de guidage en rotation présentent un angle de rotulage faible, les moyens de guidage en rotation comportant avantageusement une cage à aiguilles.

5. Dispositif selon l'une des revendications 1 à 4, dans laquelle la bobine (22) est montée entre un épaulement du noyau magnétique interne (24) et une portée du noyau magnétique externe (26).

6. Dispositif selon l'une des revendications 1 à 5, dans laquelle le noyau interne (24) a une forme annulaire et comporte un passage traversant (36) dans lequel est monté l'arbre (4), le moyen d'étanchéité assurant l'étanchéité entre l'arbre (4) et le passage traversant (36).

7. Dispositif selon la revendication 6, dans laquelle les moyens de guidage en rotation (42) sont montés dans le passage traversant (36) du noyau magnétique interne (24).

8. Dispositif selon l'une des revendications 1 à 7, dans laquelle le moyen d'étanchéité (38) est monté dans une gorge réalisée dans l'arbre (4).

9. Dispositif selon l'une des revendications 1 à 8, dans laquelle la chambre comporte une paroi disposée à l'opposé de la paroi traversée par l'arbre (4) et formé par une plaque de fermeture fixée de manière amovible.

10. Dispositif selon l'une des revendications 1 à 9, dans laquelle l'élément d'interaction avec le fluide comporte au moins deux parois d'interaction (16) concentriques.

11. Dispositif selon la revendication 10, comportant une paroi d'interaction fixe (28) par rapport à la chambre et interposée entre les aux moins deux parois d'interaction mobiles (16) concentriques, ladite paroi d'interaction fixe (28) étant concentriques aux parois d'interaction mobiles (16).

12. Dispositif selon la revendication 11, dans laquelle la paroi fixe est fixée à une plaquette (30) transversale en matériau amagnétique.

13. Dispositif selon l'une des revendications 1 à 12, dans laquelle l'élément d'interaction (8) avec le fluide comporte un fond (14) perpendiculaire à l'arbre et par lequel la paroi d'interaction (16) est fixée à l'arbre (4), ledit fond (14) étant avantageusement en matériau amagnétique

14. Dispositif selon la revendication 13, dans laquelle le fond (14) comporte au moins un trou traversant destiné à évacuer le trop plein et/ou à faciliter le remplissage.

15. Interface haptique rotative comportant un dispositif selon l'une des revendications 1 à 14, des moyens de mesure (44) d'une caractéristique d'un déplacement en rotation de l'élément d'interaction avec l'utilisateur, une unité de commande comportant des motifs haptiques, ladite unité de commande (UC) étant reliée aux moyens de mesure et aux moyens de génération d'un stimulus variable, et sont aptes à générer un ordre aux moyens de génération d'un champ magnétique (18) en fonction du motif sélectionné à partir du signal émis par les moyens de mesure, les moyens de mesure comportant avantageusement un capteur de position angulaire.

## Patentansprüche

1. Vorrichtung für eine rotierende haptische Schnittstelle, umfassend:
- ein Benutzer-Interaktionselement (2),
- ein Element zur Interaktion (8) mit einem Fluid, dessen erkennbare Viskosität in Abhängigkeit von einem Steuerungsreiz variiert,
- eine Welle (4), die um ihre Achse drehbar beweglich ist, wobei das Benutzer-Interaktionselement (2) und das Fluid-Interaktionselement (8) drehfest mit der Welle (4) verbunden sind,
- ein magnetorheologisches Fluid, dessen erkennbare Viskosität in Abhängigkeit von einem Steuerungsreiz variiert,
- eine Kammer, die durch Wände begrenzt ist und das Fluid enthält, wobei das Fluid-Interaktionselement (8) in der Kammer in Kontakt mit dem Fluid angeordnet ist,
- Mittel zur Erzeugung eines Magnetfeldes (18) in dem Fluid,
- wobei das Fluid-Interaktionselement (8) wenigstens eine bewegliche Interaktionswand (16) aufweist, die die Welle (4) umgibt, wobei die Interaktionswand (16) an einem ersten Längsende der Welle (4) gegenüber einem zweiten Längsende der Welle befestigt ist, an dem das Benutzer-Interaktionselement (2) befestigt ist,
- wobei die Welle (4) eine einzige Wand der Kammer durchquert,
- wobei ein Dichtungsmittel (38) zwischen der Welle und der Wand der Kammer derart angeordnet ist, dass ein abgedichteter Durchlass gebildet wird,
- Mittel zur Drehführung der Welle, die um die Welle herum zwischen dem Dichtungsmittel (38) und dem Benutzer-Interaktionselement angeordnet sind,
- wobei die Mittel zur Erzeugung eines variablen Magnetfeldes eine Spule (22) umfassen, die in dem Raum angeordnet ist, der innerhalb der Interaktionswand (16) des Interaktionselements (8) mit dem Fluid begrenzt ist, einen inneren Magnetkern (24), der in der Spule (22) angeordnet ist, und einen äußeren Magnetkern (26), der außerhalb der Spule (22) angeordnet ist, wobei der innere (24) und der äußere (26) Magnetkern wenigstens teilweise die Kammer begrenzen, wobei die Spule (22) derart angeordnet ist, dass sie einem Teil der Interaktionswand (16) zugewandt ist, wobei der äußere Magnetkern einen axialen Abschnitt aufweist, der eine äußere Umfangswand der Kammer bildet,
**dadurch gekennzeichnet, dass**:
- die Interaktionswand (16) sich von dem ersten Längsende der Welle (4) in Richtung des Benutzerinteraktionselements erstreckt, und dass
- der äußere Magnetkern einen radialen Abschnitt umfasst, der eine Querwand der Kammer bildet.

2. Vorrichtung nach Anspruch 1, wobei die Spule (22) derart angeordnet ist, dass sie einem freien Ende der Interaktionswand (16) zugewandt ist, welcher demjenigen gegenüberliegt, das an dem ersten Längsende der Welle (4) befestigt ist.

3. Vorrichtung nach Anspruch 1 oder 2, wobei die Rotationsführungsmittel innerhalb des Fluid-Interaktionselements in einer Linie mit der Interaktionswand angeordnet sind.

4. Vorrichtung nach Anspruch 1, 2 oder 3, wobei die Rotationsführungsmittel einen kleinen Schwenkwinkel haben, wobei die Rotationsführungsmittel vorteilhafterweise einen Nadelkäfig aufweisen.

5. Vorrichtung nach einem der Ansprüche 1 bis 4, wobei die Spule (22) zwischen einer Schulter des inneren Magnetkerns (24) und einer Reichweite des äußeren Magnetkerns (26) montiert ist.

6. Vorrichtung nach einem der Ansprüche 1 bis 5, wobei der innere Kern (24) ringförmig ist und einen Durchlass (36) aufweist, in dem die Welle (4) montiert ist, wobei das Dichtungsmittel eine Dichtung zwischen der Welle (4) und dem Durchlass (36) bereitstellt.

7. Vorrichtung nach Anspruch 6, wobei die Rotationsführungsmittel (42) in der Durchlasspassage (36) des inneren Magnetkerns (24) montiert sind.

8. Vorrichtung nach einem der Ansprüche 1 bis 7, wobei das Dichtungsmittel (38) in einer in der Welle (4) ausgebildeten Nut montiert ist.

9. Vorrichtung nach einem der Ansprüche 1 bis 8, wobei die Kammer eine Wand aufweist, die gegenüber der Wand, durch die die Welle (4) verläuft, angeordnet ist und durch eine lösbar angebrachte Verschlussplatte gebildet ist.

10. Vorrichtung nach einem der Ansprüche 1 bis 9, wobei das Fluid-Interaktionselement wenigstens zwei konzentrische Interaktionswände (16) aufweist.

11. Vorrichtung nach Anspruch 10, umfassend eine Interaktionswand (28), welche in Bezug auf die Kammer fest ist und zwischen den wenigstens zwei konzentrischen, beweglichen Interaktionswänden (16) angeordnet ist, wobei die feste Interaktionswand (28) konzentrisch zu den beweglichen Interaktionswänden (16) ist.

12. Vorrichtung nach Anspruch 11, wobei die feste Wand an einer Querplatte (30) aus nichtmagnetischem Material befestigt ist.

13. Vorrichtung nach einem der Ansprüche 1 bis 12, wobei das Fluid-Interaktionselement (8) einen Boden (14) aufweist, der senkrecht zur Welle steht und durch den die Interaktionswand (16) an der Welle (4) befestigt ist, wobei der Boden (14) vorteilhafterweise aus nichtmagnetischem Material hergestellt ist.

14. Vorrichtung nach Anspruch 13, wobei der Boden (14) wenigstens eine Durchgangsbohrung aufweist, die dazu ausgebildet ist, einen Überstand zu entfernen und/oder das Füllen zu erleichtern.

15. Rotierende haptische Schnittstelle, umfassend eine Vorrichtung nach einem der Ansprüche 1 bis 14, Messmittel (44) für ein Merkmal einer Rotationsbewegung des Benutzer-Interaktionselements, eine Steuereinheit, umfassend haptische Muster, wobei die Steuereinheit (UC) mit den Messmitteln und den Mitteln zur Erzeugung eines variablen Reizes verbunden ist, und dazu geeignet, abhängig von dem auf der Grundlage eines von den Messmitteln ausgegebenen Signals gewählten Muster einen Befehl für die Mittel zur Erzeugung eines Magnetfeldes (18) zu generieren, wobei die Messmittel vorteilhafterweise einen Sensor zur Erfassung der Winkelstellung umfassen.

## Claims

1. Device for a rotary haptic interface comprising:
- a member for interacting with the user (2),
- an interaction member (8) for interacting with a fluid, the apparent viscosity whereof varies according to a control stimulus,
- a shaft (4) suitable for rotating about the axis thereof, the member for interacting with the user (2) and the member for interacting with the fluid (8) being secured to said shaft (4) for rotation therewith,
- a fluid, the apparent viscosity whereof varies according to a control stimulus,
- a chamber defined by walls and containing said fluid, said interaction element (8) for interacting with the fluid being arranged in said chamber in contact with the fluid,
- means for generating a magnetic field (18) in the fluid,
- the element for interacting with the fluid (8) comprising at least one movable interaction wall (16) surrounding the shaft (4), said interaction wall (16) being secured to a first longitudinal end of the shaft (4) opposite a second longitudinal end of the shaft to which the element for interacting with the user (2) is secured,
- the shaft (4) passing through a single wall of the chamber,
- a sealing means (38) being arranged between the shaft and said wall so as to form a tight passage,
- means for guiding the rotation of the shaft arranged about the shaft between the sealing means (38) and the element for interacting with the user,
- the means for generating a variable magnetic field comprising a coil (22) arranged in the space defined inside the interaction wall (16) of the interaction element (8) for interacting with the fluid, an inner magnetic core (24) arranged in the coil (22) and an outer magnetic core (26) arranged outside the coil (22), said inner (24) and outer magnetic cores (26) defining at least in part the chamber, the coil (22) being arranged so as to be facing a part of the interaction wall (16), the outer magnetic core comprising an axial portion forming an outer peripheral wall of the chamber,
**characterized in that**:
- said interaction wall (16) extends from said first end towards the element for interacting with the user, and **in that**
- the outer magnetic core comprising a radial portion forming a transverse wall of the chamber.

2. Device according to claim 1, wherein the coil (22) is arranged so as to be facing a free end of the interaction wall (16) opposite that secured to the first longitudinal end of the shaft (4).

3. Device according to claim 1 or 2, wherein the means for guiding rotation are positioned inside the element for interacting with the fluid facing the interaction wall.

4. Device according to claim 1, 2 or 3, wherein the means for guiding rotation have a low rolling angle, the means for guiding rotation advantageously comprising a needle roller cage.

5. Device according to any one of claims 1 to 4, wherein the coil (22) is mounted between a shoulder of the inner magnetic core (24) and a bearing surface of the outer magnetic core (26).

6. Device according to any one of claims 1 to 5, wherein the inner core (24) has an annular shape and comprises a through passage (36) wherein the shaft (4) is mounted, the sealing means ensuring tightness between the shaft (4) and the through passage (36).

7. Device according to claim 6, wherein the means for guiding rotation (42) are mounted in the through passage (36) of the inner magnetic core (24).

8. Device according to any one of claims 1 to 7, wherein the sealing means (38) is mounted in a groove formed in the shaft (4).

9. Device according to any one of claims 1 to 8, wherein the chamber comprises a wall arranged opposite the wall traversed by the shaft (4) and formed by a closing plate secured in a removable manner.

10. Device according to any one of claims 1 to 9, wherein the element for interacting with the fluid comprises at least two concentric interaction walls (16).

11. Device according to claim 10, comprising a fixed interaction wall (28) with respect to the chamber and inserted between the at least two concentric movable interaction walls (16), said fixed interaction wall (28) being concentric to the movable interaction walls (16).

12. Device according to claim 11, wherein the fixed wall is secured to a transverse insert (30) made of amagnetic material.

13. Device according to any one of claims 1 to 12, wherein the interaction element (8) for interacting with the fluid comprises a bottom (14) perpendicular to the shaft and whereby the interaction wall (16) is secured to the shaft (4), said bottom (14) being advantageously made of amagnetic material.

14. Device according to claim 13, wherein the end (14) comprises at least one through hole intended to discharge the overflow and/or facilitate filling.

15. Rotary haptic interface comprising a device according to any one of claims 1 to 14, measurement means (44) for measuring a characteristic of a rotary movement of the element for interacting with the user, a control unit comprising haptic patterns, said control unit (UC) being connected to the measurement means and the means for generating a variable stimulus, and are suitable for generating an order to the means for generating a variable stimulus (18) according to the pattern selected on the basis of the signal emitted by the measurement means, the measurement means advantageously comprising an angular position sensor.
